(19)

Europäisches
Patentamt
European
Patent Office
Office européen
des brevets

(11)     EP 2 500 391 B1

(12)     **EUROPEAN PATENT SPECIFICATION**

(45) Date of publication and mention
of the grant of the patent:
**26.02.2014   Bulletin 2014/09**

(51) Int Cl.:
*C09J 7/02* (2006.01)          *G09F 3/10* (2006.01)
*C09J 5/06* (2006.01)          *B65C 9/24* (2006.01)
*B65C 9/25* (2006.01)

(21) Application number: **12159997.1**

(22) Date of filing: **16.03.2012**

(54) **Adhesive label and label issuing device**

Haftetikette und Vorrichtung zur Etikettenausgabe

Étiquette adhésive et dispositif d'émission d'étiquettes

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **18.03.2011   JP 2011060777**

(43) Date of publication of application:
**19.09.2012   Bulletin 2012/38**

(73) Proprietor: **Seiko Instruments Inc.**
**Chiba-shi, Chiba (JP)**

(72) Inventors:
• **Tani, Kazuo**
**Chiba-shi, Chiba (JP)**
• **Sanbongi, Norimitsu**
**Chiba-shi, Chiba (JP)**
• **Sato, Yoshinori**
**Chiba-shi, Chiba (JP)**

(74) Representative: **Miller Sturt Kenyon**
**9 John Street**
**London WC1N 2ES (GB)**

(56) References cited:
**EP-A2- 2 439 720     US-A1- 2010 300 613**

• **DATABASE WPI Week 199727 Thomson
Scientific, London, GB; AN 1997-295199
XP002680321, & JP 9 111203 A (TOPPAN
PRINTING CO LTD) 28 April 1997 (1997-04-28)**

## Description

The present invention relates to an adhesive label that has non-adhesiveness at a time of storage and is allowed to exhibit adhesiveness at a time of use.

In recent years, adhesive labels have been used for a price indication label, a product indication label, an advertisement label, a seal label for a package, and the like. As a method of recording on a recording surface of the adhesive label, various methods such as an inkjet recording method and a thermosensitive recording method are applied. Conventionally, the adhesive label has a configuration in which an adhesive layer and release paper are laminated on a surface opposite to the recording surface for characters and the like. The release paper is peeled off at a time of use to expose the adhesive layer, and the adhesive label is adhered by pressing. However, in the conventional adhesive label to be used by peeling off the release paper, the release paper after being peeled off from the adhesive label completes its function and is disposed of as waste. Therefore, there is a demand for an adhesive label that does not create waste of release paper from the viewpoint of resource protection and environment.

In order to solve the above-mentioned problem, a label that does not use release paper has also been proposed. Specifically, there has been proposed a label in which a thermosensitive adhesive layer that has non-adhesiveness at room temperature and exhibits adhesiveness by heating is formed on a surface opposite to a printed surface of a label. In this label, release paper is not required, and hence, problems related to environment and waste as in the related art do not arise. However, the label in which the thermosensitive adhesive layer is formed is stored by being rolled into a roll shape or by being stacked, and hence, the adhesive surface and the printed surface are stacked on one another in contact. Therefore, in the case of long-term storage or depending upon storage environment, there is a problem of so-called blocking, in which the thermosensitive adhesive exhibits adhesiveness due to a plasticizer contained in the thermosensitive adhesive, and this causes the printed surface and the adhesive surface to adhere to each other. Further, as heating means for exhibiting adhesiveness by using such an adhesive, it is considered to use a heat source such as a thermal head. However, when the thermal head is used for allowing the thermosensitive adhesive layer to exhibit adhesiveness by heating in addition to printing, there arise problems that power consumption increases, and in addition, the exhibited adhesiveness causes loss of transportability when the device is used.

Japanese Patent Application Laid-open No. 2006-78733 describes an adhesive label that does not use release paper and solves the problems such as blocking. As illustrated in FIG 5 (FIG 2 of Japanese Patent Application Laid-open No. 2006-78733), the adhesive label 100 has a laminated structure in which a base 101, an adhesive 102, and a resin film 103 are laminated. A polyester film is used as the resin film 103, and the resin film 103 has a thickness of 1 to 3 $\mu$m. The adhesive label 100 prevents blocking at a time of storage by covering the surface of the adhesive 102 with the resin film 103 instead of release paper or a thermosensitive adhesive. Then, at a time of use, a hole is opened in the resin film 103 by using a needle 110, or a stretched polyester film is used as the resin film 103 and a hole is opened in the resin film 103 by heating with a thermal head or the like, to thereby break a blocking prevention function and expose the underlying adhesive 102. In this manner, adhesive strength is exhibited.

Further, Japanese Patent Application Laid-open No. 09-111203 describes a configuration in which a pressure-sensitive adhesive layer is provided on a base sheet, and the pressure-sensitive adhesive layer is covered with a microcapsule layer so as to cover an adhesive surface of the pressure-sensitive adhesive layer, to thereby solve the problems such as blocking without using release paper. The microcapsule layer is formed of a single layer of a hollow microcapsule and has a melting point of about 100°C to 180°C, for example, and the surface thereof has no adhesiveness. Therefore, release paper is not required. At a time of use, the microcapsule layer is broken by heating with a thermal head to expose the underlying pressure-sensitive adhesive layer, and thus, adhesiveness is exhibited. Regarding the adhesive label described in Japanese Patent Application Laid-open No. 2006-78733, when labels are issued continuously, the labels are allowed to pass under a state in which the resin films 103 that are adhesive surfaces of the labels are brought into contact with a roller having a needle-shaped surface. With this, a hole is opened in each resin film 103 to expose an adhesive. However, the adhesive adheres to the needle 110 when the hole is opened in the resin film 103, and if the roller is rotated, the resin film 103 is pulled to be broken further. Therefore, the position and area of a region in which adhesiveness is to be exhibited cannot be controlled with high precision. In addition, the adhesive 102 and the resin film 103 scatter and adhere to the roller or the inside of the device, which makes it difficult to keep the transportability of the label. Further, in the case of using a stretched polyester film as the resin film 103 and opening a hole in the resin film 103 by heating with a thermal head, the polyester film in direct contact with a heating part is melted to be opened, and the underlying adhesive functions so as to prevent the opening. The adhesive 102 is originally used for acting on an adherend, but in this case, the adhesive function works strongly with respect to the upper polyester film, which hinders the deformation and flowing of the film in contact. Therefore, it is difficult to stably form an opening in a required shape. When the heat energy at a time of heating is increased, the shape of an opening of the polyester film becomes further unstable, and the underlying adhesive is also heated to break the polyester film and scatter the broken strips thereof, which is not practical.

Further, in Japanese Patent Application Laid-open No. Hei 09-111203, the microcapsule has a spherical shape, and hence the heat conductivity when the microcapsule comes into contact with a heat source is low. Thus, large heat energy is required for breaking the microcapsule. For this reason, the adhesive label of Japanese Patent Application Laid-open No. Hei 09-111203 is not suitable for label issuing of a low power consumption type.

An adhesive label according to the present invention includes a support, an adhesive layer placed on the support, and a non-adhesive resin layer containing an inorganic filler, the non-adhesive resin layer being placed on the adhesive layer.

Further, the resin layer is made of an olefin-based resin.

Further, the resin layer contains 10% by volume to 90% by volume of the inorganic filler.

Further, a heat capacity per unit area of the resin layer is smaller than a heat capacity per unit area of the adhesive layer.

Further, the adhesive label further includes a thermosensitive color-developing layer placed on a side of the support opposite to the adhesive layer.

Further, the resin layer is openable by heating so that the adhesive layer is exposed.

A label issuing device according to the present invention includes: a transporting part for transporting an adhesive label including a support, an adhesive layer placed on the support, and a non-adhesive resin layer containing an inorganic filler, the non-adhesive resin layer being placed on the adhesive layer; a recording part for performing recording on a side of the support opposite to the adhesive layer; and a heating part for opening the non-adhesive resin layer by heating so that the adhesive layer is exposed.

The adhesive label according to the present invention includes the support, the adhesive layer placed on the support, and the non-adhesive resin layer placed on the adhesive layer. This saves the labor for disposing of release paper because release paper is not discharged at a time of use, and the adhesive label of the present invention is excellent also in environmental resistance from the viewpoint of saving resources. Further, the resin layer has an anti-blocking property without adhesiveness, and thus the adhesive label can be stored by being rolled into a roll shape. Further, the resin layer contains the inorganic filler, and has heat conductivity higher than that of a resin layer not containing an inorganic filler. Therefore, an opening can be formed in the resin layer stably with good sensitivity.

Embodiments of the present invention will now be described by way of further example only and with reference to the accompanying drawings, in which:

FIG 1 is a schematic vertical cross-sectional view of an adhesive label according to a first embodiment of the present invention;

FIGS. 2A to 2D are explanatory views illustrating how the adhesive label according to the present invention exhibits adhesiveness;

FIGS. 3A and 3B are schematic plan views illustrating examples of openings formed in a resin layer of the adhesive label according to the present invention;

FIG 4 is a schematic structural view of a label issuing device according to a second embodiment of the present invention; and

FIG 5 is a schematic view of a conventionally known label issuing device.

(First embodiment)

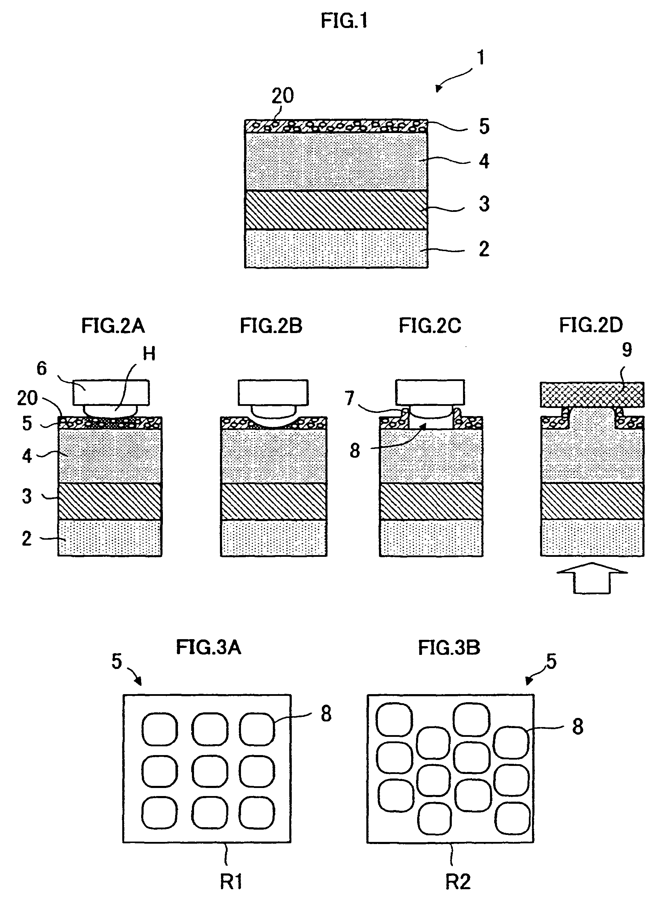

FIG 1 is a schematic vertical cross-sectional view of an adhesive label 1 according to a first embodiment of the present invention. The adhesive label 1 has a configuration in which a print recording layer 2, a support 3, an adhesive layer 4, and a resin layer 5 containing an inorganic filler 20 are laminated from a lowermost surface. The adhesive label 1 of the present invention is allowed to exhibit adhesiveness by opening the resin layer 5 with heating to expose the adhesive layer 4. Meanwhile, the resin layer 5 has non-adhesiveness and does not cause blocking even when the adhesive label 1 is stacked or rolled into a roll shape for storage. Characters, graphics, and the like can be printed on the print recording layer 2. For example, the print recording layer 2 is printed by using a label issuing device, and the resin layer 5 is opened by localized heating. Thus, the adhesive label 1 in which a particular portion of the adhesive layer 4 is exposed can be issued. Note that, the support 3 can be printed directly without forming the print recording layer 2.

When a heated region is melted to be liquefied and an opening is formed in the resin layer 5, the opening is enlarged in diameter due to the surface tension of a resin material. That is, the resin material aggregates and flows to an end of the opening, thereby enlarging the opening diameter. In the configuration of the present invention, the resin layer 5 contains the inorganic filler 20, whereby the coefficient of heat conductivity of heat energy increases to facilitate the melting and flow of the resin material. Meanwhile, the adhesive layer 4 uses its adhesive strength to prevent the resin material from enlarging the opening diameter. The adhesive strength of the adhesive layer 4 decreases along with an increase in temperature, and when the resin layer 5 includes the inorganic filler 20, the effect of preventing the diameter enlargement caused by the resin material is reduced. Thus, in order to lower the adhesion function of the adhesive layer 4, it is necessary to raise the temperature of the resin material, and in order to form an opening stably in a required shape, it is necessary to reduce the temperature unevenness of the resin material and heat the resin material uniformly.

In the adhesive label 1 according to the present invention, the resin layer 5 covering the adhesive layer 4 contains the inorganic filler 20. An inorganic material for the inorganic filler 20 has a coefficient of heat conductivity higher than that of a resin material for the resin layer 5. For example, the coefficient of heat conductivity of a polymer material is 0.1 W/m°C to 0.5 W/m°C, and the coefficient of heat conductivity of the inorganic material is higher than the above-mentioned range by one order of magnitude or more. Therefore, the coefficient of heat conductivity of the resin layer 5 is increased, and the heated region of the resin layer 5 can be rapidly raised in temperature over the entire layer thickness. With this, the resin opening 5 can be opened stably with good sensitivity, and the position and area of an exposed region of the adhesive layer 4 can be controlled with high precision. Further, the thickness of the opened resin layer 5 itself increases, or a convex part in which the periphery of the opening is higher than the surface of the resin layer 5 is formed, and hence the heating part and the adhesive layer 4 are prevented from coming into direct contact with each other. Thus, the transportability of the adhesive label 1 can be ensured.

FIGS. 2A to 2D are explanatory views illustrating how the adhesive label 1 according to the present invention exhibits adhesiveness. A thermal head 6 is used as heating means. As illustrated in FIG 2A, a heating part H of the thermal head 6 is brought into contact with the resin layer 5 of the adhesive label 1. Then, as illustrated in FIG 2B, the heated resin layer 5 starts being melted, and an opening 8 is formed in the resin layer 5 as illustrated in FIG 2C. Thus, simultaneously with the formation of the opening 8, a convex part 7 higher than the surface of the resin layer 5 is formed on the periphery of the opening 8, and the underlying adhesive layer 4 is exposed. Then, as illustrated in FIG 2D, when the adhesive label 1 is pressed from the bottom side of the print recording layer 2, an adhesive of the opening 8 adheres to an adherend 9. The print recording layer 2 can be printed before or after the illustration of FIGS. 2A to 2D to use the adhesive label 1 as a label.

FIGS. 3A and 3B are schematic plan views illustrating examples of the openings 8 formed in the resin layer 5 of the adhesive label 1 according to the present invention. FIG 3A illustrates a state in which nine openings 8 are formed so as to be aligned in a region R1 of the resin layer 5 by using the thermal head 6. FIG 3B illustrates a state in which twelve openings 8 are formed so as to be aligned diagonally in a region R2 of the resin layer 5 by using the thermal head 6. As described above, any opening pattern can be formed by arranging any number of the openings 8 in any direction at any position.

Here, a synthetic resin material can be used as the resin layer 5. An inorganic material can be used as the inorganic filler 20. The resin layer 5 contains 10% by volume to 90% by volume of the inorganic filler 20. This is because, when the content of the inorganic filler 20 is less than 10% by volume, the effect of enhancing a coefficient of heat conductivity is low, and when the content of the inorganic filler 20 is more than 90% by volume, the variation in physical property values increases. Note that, because the resin material covers the inorganic filler 20, the coefficient of heat conductivity of the resin material becomes dominant, and the heat conductivity based on proportional distribution between the resin material and the inorganic material does not appear. It is preferred that the resin layer 5 contain 20% by volume to 60% by volume of the inorganic filler 20. A material for adjusting physical properties such as a plasticizer can be added to the resin layer 5, if required. Further, the shape of the inorganic filler 20 is not particularly limited, and the inorganic filler 20 may be in a plate or spherical shape. However, considering the variation in physical property values and dispersibility, a spherical particle shape is more preferred than a non-spherical particle shape.

Further, as the resin layer 5, a resin layer formed by a stretching process can be used. A stretching film is stretched in a vertical or horizontal direction at high temperature (e.g., at temperature equal to or higher than glass transition temperature) to be fixed thermally. When the thermally fixed stretched film is heated to temperature equal to or higher than thermal fixing temperature, the stretched film shrinks so as to return to the state before the stretching. That is, when the resin layer 5 is softened or melted by heating, a thermally fixed stress is released together with the surface tension of the resin material to function so as to enlarge the opening rapidly.

Further, the resin layer 5 can be configured in such a manner that the heat capacity per unit area thereof is smaller than that of the underlying adhesive layer 4. That is, by configuring the upper resin layer 5 so that the heat capacity thereof becomes smaller than that of the underlying adhesive layer 4, an increase in temperature of the underlying adhesive layer 4 is suppressed, which can prevent the adhesive layer 4 from being deformed or altered by heat.

As the support 3, a plastic material can be used. The support 3 may be made of any material that can support the print recording layer 2 to be formed on a lower surface thereof and the adhesive layer 4 to be formed on an upper surface thereof. For example, polypropylene, polyethylene, polystyrene, acrylic resin, or paper can be used.

As the adhesive layer 4, a pressure-sensitive adhesive can be used. The pressure-sensitive adhesive can adhere to an adherend merely by applying a small pressure at room temperature without using water, a solvent, or heat. Further, the pressure-sensitive adhesive adheres to an adherend strongly due to its cohesion force and elasticity, and can also be peeled off from a hard smooth surface. Specifically, a silicone-based adhesive, a rubber-based adhesive, or an acrylic adhesive can be used depending upon its intended use. The silicone-based adhesive can include silicone having a high cohesion force and silicone having a high adhesive strength. As the rubber-based adhesive, natural rubber, styrene-butadiene rubber (SBR), polyisobutylene, or a rubber-based material can be used. As the acrylic adhesive, a cross-linking material using a monomer with a low glass transition point and a cross-linking agent, or a non-cross-linking material obtained by copolymerizing a monomer with a low glass transition point and a monomer with a high glass transition point can be used.

As the resin layer 5, an olefin-based resin can be used. The olefin-based resin is used for many purposes as a general-purpose resin, and hence can form the resin layer 5 at low cost. As the olefin-based resin, polyethylene (PE), polyvinyl chloride (PVC), polypropylene (PP), a multi-layer polyolefin-based resin in which PE and PP are stacked, polystyrene (PS), and polyethylene terephthalate (PET) can be used. As the olefin-based resin, a homopolymer, a copolymer, or a multistage polymer can be used. Polyolefin selected from the group consisting of the homopolymer, the copolymer, and the multistage polymer can also be used alone or in combination. Typical examples of the above-mentioned polymers include low-density polyethylene, linear low-density polyethylene, medium-density polyethylene, high-density polyethylene, ultrahigh molecular weight polyethylene, isotactic polypropylene, atactic polypropylene, polybutene, and ethylene propylene rubber.

Further, a hybrid that is a stack type of PS and PET, an ethylene/vinyl acetate copolymer (EVA) based resin, a polyvinyl alcohol (PVA) based resin, a polylactic acid (PLA) based resin that is a plant-based material, and the like can be used. Further, a cellulose-based material that can be expected to lower the cost can be used. It is preferred to select, as the resin layer 5, a material whose contact angle with respect to the adhesive layer 4 to be adjacent to the resin layer 5 increases during heating. Further, in the case of selecting a stretching process for forming the resin layer 5, a uniaxially stretched or biaxially stretched material can be used. In the case of using a stretched film, there can be used a material which is stabilized by manipulating a glass transition point by copolymerizing a single monomer with another monomer or blending different kinds of components such as rubber.

The viscosity average molecular weight of the olefin-based resin is preferably 50,000 to 12,000,000, more preferably 50,000 to less than 2,000,000, most preferably 100,000 to less than 1,000,000. If the viscosity average molecular weight is 50,000 or more, the melt-tension at a time of melt molding becomes large to enhance moldability, which provides sufficient entanglement and tends to give high strength. If the viscosity average molecular weight is 12,000,000 or less, particularly, thickness stability is excellent.

The kind of the inorganic filler 20 is not particularly limited. For example, there may be used, alone or as a mixture of two or more, oxide-based ceramics such as alumina, silica, titania, zirconia, magnesia, yttria, zinc oxide, and iron oxide, nitride-based ceramics such as silicon nitride, titanium nitride, and boron nitride, ceramics such as silicon carbide, calcium carbonate, aluminum sulfate, aluminum hydroxide, potassium titanate, talc, kaolin clay, kaolinite, halloysite, pyrophyllite, montmorillonite, sericite, mica, amesite, bentonite, asbestos, zeolite, calcium silicate, magnesium silicate, diatomaceous earth, and silica sand, and glass fiber. For example, a filler of boron nitride, silicon carbide, or aluminum nitride exhibits a coefficient of heat conductivity 5 to 40 times as high as that of an oxide filler. Further, the addition of an oxide filler of, for example, alumina or silica for a resin material may increase the coefficient of heat conductivity by one order of magnitude or more.

As the print recording layer 2, a thermosensitive color-developing layer that develops color by heating can be used. For example, a thermosensitive recording layer coating solution is prepared by mixing a leuco dye with a developer that allows the leuco dye to develop color, and is applied to the print recording layer 2. A recording layer capable of recording by an inkjet recording apparatus may be used in place of the thermosensitive color-developing layer.

Next, a method of producing the adhesive label 1 is described. The adhesive label 1 is produced in the following manner. The resin layer 5 is attached to the support 3 coated with an adhesive or the support 3 with the adhesive layer 4 formed thereon. A coextrusion procedure can be used for the attachment. As a device for coating the support 3 with an adhesive, a bar coater, an airknife coater, a squeeze coater, a gravure coater, or the like can be used. At a time of coating, film viscosity, film thickness, and a drying process are selected appropriately. A plurality of layers comprising the support 3, the adhesive layer 4, and the resin layer 5 are attached, and hence a residual stress based on the thermal contraction and moisture absorption acts. The dimension stability, flatness of a surface, moisture resistance, solvent resistance, mechanical strength, friction coefficient of a surface, and flexibility at a time of contact with a heat source of the adhesive label 1 are to be noted.

Next, the exhibition of adhesive strength is described. The adhesive strength of the adhesive label 1 is exhibited when an adhesive comes into contact with the surface of an adherend through the openings 8. Here, a volume amount Q per unit time of the adhesive that flows out through the openings 8 is expressed as follows:

$$Q = 4\pi Pa/(8L\eta_0)$$

where P represents a pressure to be applied to the adherend, a represents a radius of the opening 8, L represents a distance of the opening 8 (height of the convex part 7 from the boundary between the resin layer 5 and the adhesive layer 4), and $\eta_0$ represents the viscosity of the adhesive. It is understood from the expression that, as the viscosity $\eta_0$ is larger and the distance L of the opening 8 is larger, the amount of the adhesive that flows out through the openings 8 becomes smaller. Thus, it is necessary to select the thickness of the resin layer 5 and the viscosity of the adhesive appropriately. In the adhesive label 1 of the present invention, the radius a of the opening 8 can be controlled with high precision, and hence the controllability of the amount of the adhesive that flow out through the openings 8 is enhanced, and predetermined adhesive strength can be exhibited stably.

**(Second embodiment)**

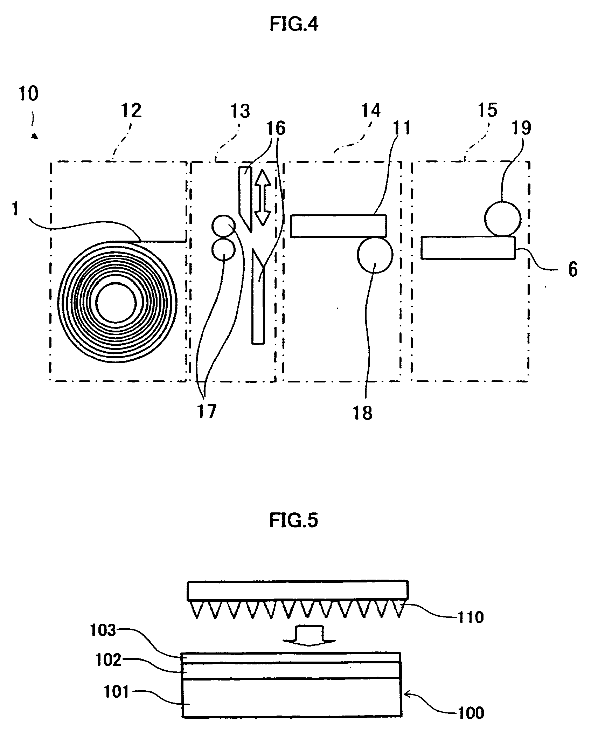

FIG 4 is a schematic structural view of a label issuing device 10 according to a second embodiment of the present invention. The label issuing device 10 includes a roll paper accommodating part 12 for accommodating the adhesive label 1, a roll paper cutting part 13 for cutting the adhesive label 1, a label recording part 14 as a recording part for recording on the adhesive label 1, and an adhesiveness exhibiting part 15 for allowing the adhesive label 1 to exhibit adhesiveness. The roll paper accommodating part 12 accommodates the adhesive label 1 rolled into a roll shape. The adhesive label 1 has a laminated structure in which the print recording layer 2, the support 3, the adhesive layer 4, and the resin layer 5 are laminated. The roll paper cutting part 13 cuts the adhesive label 1 sent from transporting rollers 17 as a transporting part to a predetermined length by a cutter member 16. The label recording part 14 performs recording by a recording thermal head 11 on the print recording layer 2 of the adhesive label 1 placed on a transporting roller 18. As already described in the first embodiment, the adhesiveness exhibiting part 15 heats the resin layer 5 of the adhesive label 1 placed on a transporting roller 19 by the thermal head 6 as the heating part H to expose the underlying adhesive layer 4.

Here, the thermal head 6 is configured by arranging a plurality of heat-generating parts in parallel, and thus, can form a plurality of openings 8 simultaneously so that the openings 8 are arranged in parallel. Further, a plurality of openings 8 can be formed continuously in the transport direction of the adhesive label 1. Specifically, a required number of openings 8 can be formed at required positions of the adhesive label 1. That is, the position and size of a region in which the adhesive label 1 is allowed to exhibit adhesiveness can be set. Further, the size of the openings 8 can be controlled with high precision, and hence the adhesive strength can be exhibited stably.

Further, when the openings 8 are provided in the resin layer 5, a gap is formed between the heating part H of the thermal head 6 and the upper surface of the adhesive layer 4 due to the thickness of the resin layer 5 or the convex part 7 interposed on the periphery of each opening 8. Therefore, the transportability of the adhesive label 1 can be kept without allowing the adhesive layer 4 to adhere to the thermal head 6. Further, the adhesive label 1 according to the present invention can exhibit adhesiveness by opening the resin layer 5 stably with good sensitivity and low activating energy, which is preferred for configuring a portable label issuing device 10.

**Claims**

1. An adhesive label (1), comprising:

   a support (3);
   an adhesive layer (4) placed on the support; and
   a non-adhesive resin layer (5) containing an inorganic filler (20), the non-adhesive resin layer being placed on the adhesive layer.

2. An adhesive label according to claim 1, wherein the non-adhesive resin layer is made of an olefin-based resin.

3. An adhesive label according to claim 1 or claim 2, wherein the non-adhesive resin layer contains 10% by volume to 90% by volume of the inorganic filler.

4. An adhesive label according to any one of the preceding claims, wherein a heat capacity per unit area of the non-adhesive resin layer is smaller than a heat capacity per unit area of the adhesive layer.

5. An adhesive label according to any one of the preceding claims, further comprising a thermosensitive color-developing layer (2) placed on a side of the support opposite (3) to the adhesive layer (4).

6. An adhesive label according to any one of the preceding claims, wherein the non-adhesive resin layer is openable by heating so that the adhesive layer is exposed.

7. A label issuing device (10), comprising:

   a transporting part (17) for transporting an adhesive label (1) including a support (3), an adhesive layer (4) placed on the support, and a non-adhesive resin layer (5) containing an inorganic filler (20), the non-adhesive resin layer being placed on the adhesive layer;
   a recording part (14) for performing recording on a side of the support opposite to the adhesive layer; and
   a heating part (15) for opening the non-adhesive resin layer by heating so that the adhesive layer is exposed.

**Patentansprüche**

1. Haftetikette (1), umfassend:

einen Träger (3);

eine Haftschicht (4), die auf dem Träger angeordnet ist; und

eine nicht haftende Harzschicht (5), die ein anorganisches Füllmittel (20) enthält, wobei die nicht haftende Harzschicht auf der Haftschicht angeordnet ist.

2. Haftetikette nach Anspruch 1, wobei die nicht haftende Harzschicht aus einem Harz aus Olefinbasis besteht.

3. Haftetikette nach Anspruch 1 oder Anspruch 2, wobei die nicht haftende Harzschicht 10 Volumenprozent bis 90 Volumenprozent des anorganischen Füllmittels enthält.

4. Haftetikette nach einem der vorangehenden Ansprüche, wobei eine Wärmekapazität pro Einheitsfläche der nicht haftenden Harzschicht kleiner ist als eine Wärmekapazität pro Einheitsfläche der Haftschicht.

5. Haftetikette nach einem der vorangehenden Ansprüche, des Weiteren umfassend eine thermoempfindliche farbentwickelnde Schicht (2), die an einer Seite des Trägers (3) gegenüber der Haftschicht (4) angeordnet ist.

6. Haftetikette nach einem der vorangehenden Ansprüche, wobei die nicht haftende Harzschicht durch Wärme geöffnet werden kann, so dass die Haftschicht frei liegt.

7. Vorrichtung (10) zur Etikettenausgabe, umfassend:

ein Transportteil (17) zum Transportieren einer Haftetikette (1), die einen Träger (3), eine Haftschicht (4), die auf dem Träger angeordnet ist, und eine nicht haftende Harzschicht (5) die ein anorganisches Füllmittel (20) beinhaltet, enthält, wobei die nicht haftende Harzschicht auf der Haftschicht angeordnet ist;

ein Aufzeichnungteil (14) zum Durchführen einer Aufzeichnung an einer Seite des Trägers gegenüber der Haftschicht; und

ein Heizteil (15) zum Öffnen der nicht haftenden Harzschicht durch Erwärmen, so dass die Haftschicht frei liegt.

**Revendications**

1. Etiquette adhésive (1), comprenant :

un support (3) ;

une couche adhésive (4) placée sur le support ; et

une couche de résine non adhésive (5) contenant une charge inorganique (20), la couche de résine non adhésive étant placée sur la couche adhésive.

2. Etiquette adhésive selon la revendication 1, dans laquelle la couche de résine non adhésive est formée par une résine à base d'oléfine.

3. Etiquette adhésive selon la revendication 1 ou la revendication 2, dans laquelle la couche de résine non adhésive contient 10% en volume à 90% en volume de charge inorganique.

4. Etiquette adhésive selon l'une quelconque des revendications précédentes, dans laquelle une capacité d'échauffement par unité de surface de la couche de résine non adhésive est plus faible qu'une capacité d'échauffement par unité de surface de la couche adhésive.

5. Etiquette adhésive selon l'une quelconque des revendications précédentes, comprenant par ailleurs une couche de développement de couleurs thermosensible (2) placée sur un côté du support opposé (3) à la couche adhésive (4).

6. Etiquette adhésive selon l'une quelconque des revendications précédentes, dans laquelle la couche de résine non adhésive peut être ouverte par échauffement de manière à exposer la couche adhésive.

7. Dispositif d'émission d'étiquettes (10) comprenant :

un organe de transport (17) pour transporter une étiquette adhésive (1) comprenant un support (3), une couche adhésive (4) placée sur le support, et une couche de résine non adhésive (5) contenant une charge inorganique (20), la couche de résine non adhésive étant placée sur la couche adhésive ;

un organe d'enregistrement (14) pour effectuer un enregistrement sur un côté du support opposé à la couche adhésive ; et

un organe d'échauffement (15) pour ouvrir la couche de résine non adhésive par échauffement de manière à ce que la couche adhésive soit exposée.

# FIG.1

# FIG.2A  FIG.2B  FIG.2C  FIG.2D

# FIG.3A  FIG.3B

R1  R2

## FIG.4

## FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006078733 A
- JP 9111203 A
- JP HEI09111203 B